# EUROPEAN PATENT APPLICATION

(11) **EP 1 538 348 A1**
(43) Date of publication of application: **08.06.2005**
(21) Application number: 03257585.4
(22) Date of filing: 02.12.2003
(51) Int. Cl.: F16B 23/00

(54) **Screw having an actuating groove formed with a square groove portion and four rectangular groove portions**

(71) Applicant: Wang, Sam S., Tou-Liu City, Yun-Lin Hsien (TW)
(72) Inventor: Wang, Sam S., Tou-Liu City, Yun-Lin Hsien (TW)
(74) Representative: Brereton, Paul Arthur

(57) **Abstract**

A screw 5 includes a shank 4 and a head 3 having a driver-engageable surface 31, and an actuating groove 32. The actuating groove 32 includes a square groove portion 321 formed at the center of the surface 31 and having four sides 322, and two pairs of rectangular groove portions 323 that extend from middle portions of the sides 322 of the square groove portion 321. Each pair of the rectangular groove portions 323 extend respectively, radially, and outwardly from two opposite sides 322 of the square groove portion 321, and are aligned with each other.

## Description

The invention relates to a screw, more particularly to a screw that is adapted for use with various kinds of screwdrivers.

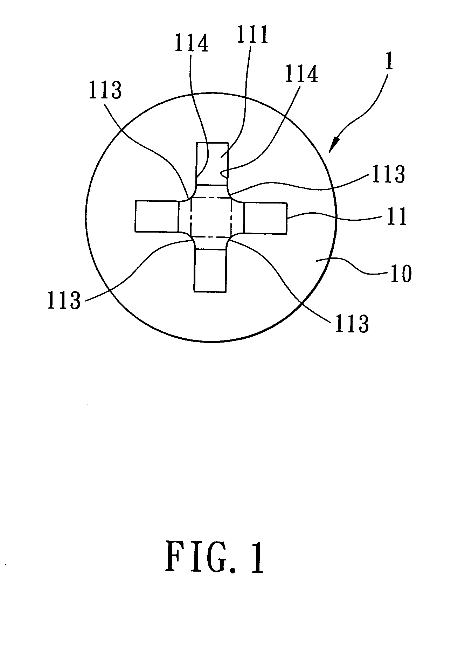

Referring to Figure 1, a conventional screw 1 is shown to comprise a head 10 having an actuating groove 11 formed with a cross-shaped groove portion 111. This kind of actuating groove 11 in the screw 1 is adapted for use with a flat-headed tip, a cross-headed tip, or a square-headed tip screwdriver (not shown) to achieve its multi-function purpose. However, since each angular end 113 of the cross-shaped groove portion 111 is curved, a front end portion of the screwdriver contacts only the parallel sides 114 of the cross-shaped groove portion 111 so that when a greater torsion force is applied to rotate the screw 1, the screwdriver easily slips away from the head 10 of the screw 1.

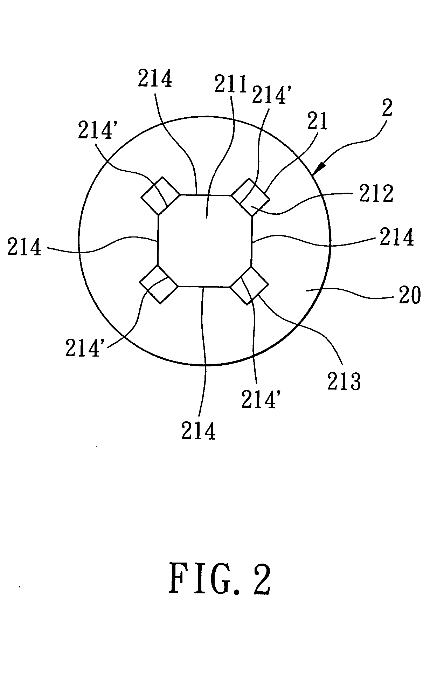

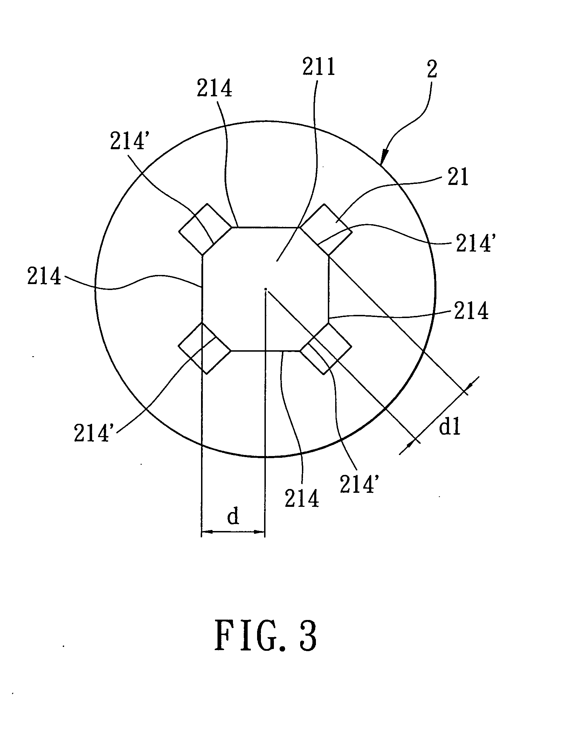

Referring to Figure 2, another conventional screw 2 is shown to include a head 20 having an actuating groove 21 formed with an octagonal groove portion 211 and four rectangular groove portions 212 extending respectively from four spaced-apart first sides 214' of the octagonal groove portion 211. Each of the rectangular groove portions 212 is in communication with the octagonal groove portion 211 so as to form a cross-shaped groove 213. However, referring to Figure 3, since each of the four spaced-apart second sides 214 of the octagonal groove portion 211 has a first distance (d) from a center of the actuating groove 21, and since each of the first sides 214' of the octagonal groove portion 211 has a second distance (d1) from the center that is slightly longer than the first distance (d) , contact area between the screwdriver and the screw 2 is still reduced, thereby affecting adversely rotation of the screw 2.

Therefore, the object of the present invention is to provide a screw that is capable of overcoming the aforementioned drawbacks of the prior art.

According to this invention, a screw comprises a shank having an axis, and a head formed integrally with the shank. The head has a driver-engageable surface, and an actuating groove formed in the surface. The actuating groove includes a square groove portion formed at the center of the surface and having four sides, and two pairs of rectangular groove portions extending respectively from middle portions of the sides of the square groove portion. Each pair of the rectangular groove portions extend respectively, radially, and outwardly from two opposite ones of the sides of the square groove portion, and are aligned with each other. Each of the rectangular groove portions is defined by an inclined rectangular wall and two opposed triangular walls. The rectangular wall extends from the surface toward the axis of the shank, and has two inclined long sides, and two short sides, which are parallel to the surface. The triangular walls are perpendicular to the surface, and extend respectively from the long sides of the rectangular wall.

Other features and advantages of the present invention will become apparent in the following detailed description of the preferred embodiment with reference to the accompanying drawings, of which:
Figure 1 is a schematic top view of a head of a conventional screw, illustrating configuration of an actuating groove in the head;
Figure 2 is a schematic top view of a head of another conventional screw, illustrating configuration of an actuating groove in the head;
Figure 3 is a schematic top view of a head of a screw shown in Figure 2, illustrating how contact area between the screw and a screwdriver is reduced;
Figure 4 is a partly sectional view of the preferred embodiment of a screw according to the present invention;
Figure 5 is a sectional view of the preferred embodiment; and
Figure 6 is a schematic top view of the preferred embodiment.

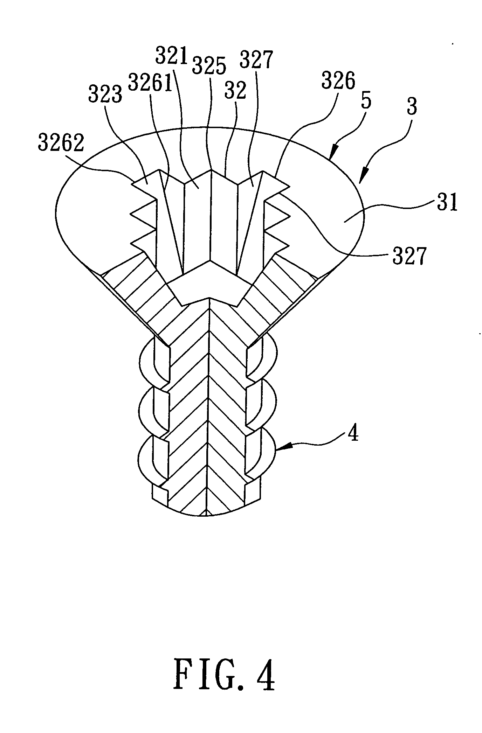

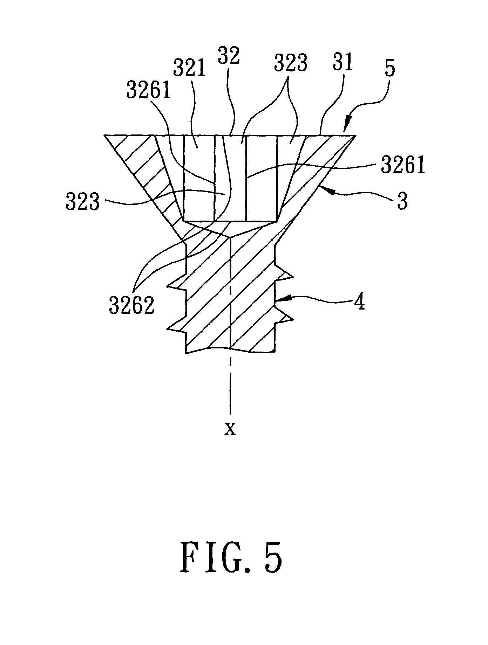

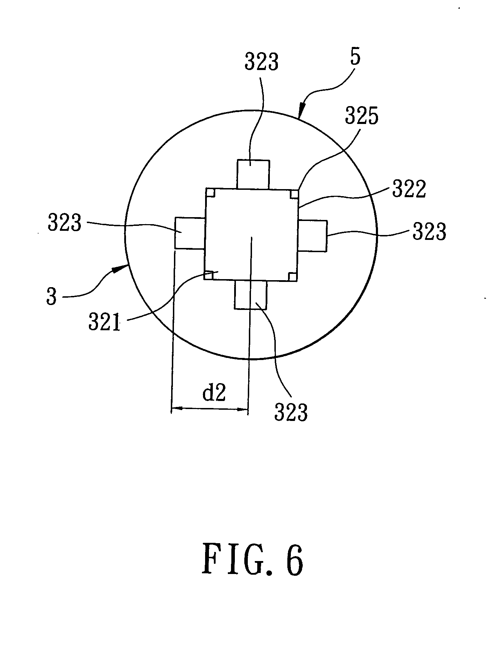

Referring to Figures 4 to 6, the preferred embodiment of a screw 5 according to the present invention is shown to comprise a threaded shank 4 having an axis (x), and a head 3 formed integrally with the shank 4.

The head 3 has a driver-engageable surface 31, and an actuating groove 32 formed in the surface 31. The actuating groove 32 includes a square groove portion 321 formed at the center of the surface 31 and having four sides 322, and two pairs of rectangular groove portions 323 extending respectively from middle portions of the sides 322 of the square groove portion 321 . The square groove portion 321 further has four right angles 325. Each pair of the rectangular groove portions 323 extend respectively, radially, and outwardly from two opposite sides 322 of the square groove portion 321, and are aligned with each other. Each of the rectangular groove portions 323 is defined by an inclined rectangular wall 326 and two opposed triangular walls 327. The rectangular wall 326 of each rectangular groove portion 323 extends from the surface 31 toward the axis (x) of the shank 4, and has two inclined long sides 3261 and two short sides 3262. The short sides 3262 are parallel to the surface 31. The triangular walls 327 of each rectangular groove portion 323 are perpendicular to the surface 31, and extend respectively from the long sides 3261 of the rectangular wall 326 of the respective one of the rectangular groove portions 323.

Since the actuating groove 32 in the surface 31 of the screw 5 of the present invention has four rectangular groove portions 323 that cooperate with the square groove portion 321, the screw 5 can be adapted for use with a flat-headed tip, a cross-headed tip, or a square-headed tip screwdriver (not shown).

Because the square groove portion 321 of the actuating groove 32 has four right angles 325, contact area between a front end portion of the screwdriver and the head 3 is increased so that when a greater torsion force is applied to rotate the screw 5, the screwdriver is not likely to slip away from the head 3 of the screw 5, thereby increasing stability during use.

From the aforementioned description of the preferred embodiment of the screw 5 of the present invention, it is apparent that due to the presence of the right angles 325 in the actuating groove 32 in the head 3 of the screw 5, the contact area between the screwdriver and a wall of the head 3 defining the actuating groove 32 is increased, which in turn, prevents slippage of the screwdriver from the head 3 of the screw 5 even when a greater torsion force is applied to rotate the screw 5. Thus, the screwdriver can firmly fix or remove the screw 5 as intended.

As compared to the conventional screw 2 of Figure 3, it is apparent that each side 322 of the square groove portion 321 in the screw 5 of this invention has a distance (d2) from the center of the surface 31 that is comparable to the first distance (d) of the conventional screw 2 so that the front end of the screwdriver can have a greater area of contact with the wall of the head 3 that defines the actuating groove 32 of the present invention. The object of the present invention is thus met.

## Claims

1. A screw (5) **characterized by**:
a shank (4) having an axis (x); and
a head (3) formed integrally with said shank (4) and having a driver-engageable surface (31), and an actuating groove (32) formed in said surface (31), said actuating groove (32) including
a square groove portion (321) formed at a center of said surface (31) and having four sides (322), and
two pairs of rectangular groove portions (323) extending respectively from middle portions of said sides (322) of said square groove portion (321), each pair of said rectangular groove portions (323) extending respectively, radially, and outwardly from two opposite ones of said sides (322) of said square groove portion (321) and being aligned with each other, each of said rectangular groove portions (323) being defined by an inclined rectangular wall (326) and two opposed triangular walls (327), said rectangular wall (326) extending from said surface (31) toward said axis (x) of said shank (4) and having two inclined long sides (3261) and two short sides (3262), said short sides (3262) being parallel to said surface (31), said triangular walls (327) being perpendicular to said surface (31) and extending respectively from said long sides (3261) of said rectangular wall (326).

2. A screw (5) comprising a shank (4) having an axis (x) and a head formed integrally with the shank, the head having an end surface (31) in which a slot or groove (32) is formed for engagement with a driver, the slot or groove (32) including cross-shaped slot portions (323) **characterised in that** the slot or groove (32) includes a square slot portion (321) at the centre of the end surface (31) with four sides (322) and the cross-shaped slot portions are formed by two pairs of rectangular slot portions (323) each pair of rectangular slot portions extending outwardly from the middle portions of a different pair of opposite sides (322) of the square slot portion (321), and the slot portions of each pair of rectangular slot portions (323) being aligned with each other, each rectangular slot portion tapering in radial dimension from the axis (x) from the end surface (31) towards the shank (4).
